# EUROPEAN PATENT APPLICATION

(11) **EP 1 909 428 A1**
(43) Date of publication of application: **09.04.2008**
(21) Application number: 07014697.2
(22) Date of filing: 26.07.2007
(51) Int. Cl.: H04L 9/08

(54) **Method and system for variable and changing keys in a code encryption system**

(30) Priority: 06.10.2006 US 828552 P; 05.06.2007 US 758421
(71) Applicant: Broadcom Corporation, Irvine, CA 92617 (US)
(72) Inventor: Rodgers, Stephane, Irvine, CA 92617 (US)
(74) Representative: Jehle, Volker Armin

(57) **Abstract**

Methods and systems are disclosed for decrypting segmented code of varying segment lengths wherein each segment of code may be protected with a different set of decryption parameters. Sets of decryption parameter information may be embedded subsequent to and contiguous with corresponding code segments. Sets of decryption algorithm parameter information may comprise: decryption key information, IV bit, initialization vector information and code segment length. The decryption key information may comprise an index to a key table. The key table may be stored using combinatorial logic. Successive blocks of information may be decrypted with an initialization vector and/or with a decrypted output from a preceding decrypted block of information. Decryption parameter information corresponding to a current segment of code may be decrypted with a preceding segment of code. Decryption algorithm parameters may be generated using a linear feedback shift register utilizing a seed acquired from a one-time-programmable memory.

## Description

### CROSS-REFERENCE TO RELATED APPLICATIONS/INCORPORATION BY REFERENCE

This application makes reference to and claims priority to United States Provisional Application Serial No. 60828552 (Attorney Docket No. 17948US01), filed on October 6, 2006, entitled "METHOD AND SYSTEM FOR VARIABLE AND CHANGING KEYS IN A CODE ENCRYPTION SYSTEM."

This application makes reference to:
United States Provisional Application Serial No. (Attorney Docket No. 17946US01), filed on even date herewith;
United States Provisional Application Serial No. (Attorney Docket No. 17950US01), filed on even date herewith;
United States Provisional Application Serial No. (Attorney Docket No. 17952US01), filed on even date herewith;
United States Provisional Application Serial No. (Attorney Docket No. 17954US01), filed on even date herewith; and
United States Provisional Application Serial No. (Attorney Docket No. 17955US01), filed on even date herewith.

Each of the above stated applications is hereby incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to encryption systems. More specifically, certain embodiments of the invention relate to a method and system for variable and changing keys in a code encryption system.

### BACKGROUND OF THE INVENTION

In an increasingly security conscious world, protecting access to information and/or to systems from unwanted discovery and/or corruption is a major issue for both consumers and businesses. Many consumer or business systems may be vulnerable to unwanted access when the level of security provided within the system is not sufficient for providing the appropriate protection. In this regard, consumer systems, such as multimedia systems, for example, may require the use of integrated architectures that enable security management mechanisms for defining and administering user rights or privileges in order to provide the necessary protection from unwanted access. An example of a multimedia system that may be accessed by many different users may be a set-top box where manufacturers, vendors, operators, and/or home users may have an interest in accessing or restricting at least some limited functionality of the system.

Many secure systems with distributed elements utilize encryption algorithms and corresponding keys to restrict access to specified users. These algorithms may be effective unless unauthorized users obtain the encryption key and thus are able to gain access. In a system where similar devices are distributed in the field, a common encryption key may allow access to all of the like devices. If an unauthorized user discovers the key, the user may gain access to all like devices. Additionally, the discovered key may be communicated to other unwanted users who may also be able to access the distributed units.

One solution to unauthorized access may be to assign a unique encryption key for each unit distributed in the field. In this case, if the encryption key is identified by a wrongful user for one device, it may not be used again for access to the other devices. In large systems however, this method may become logistically impractical to implement because each device in the field would require a unique unit of code and a key unique for users of each device would need to be distributed.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for variable and changing keys in a code encryption system, substantially as shown in and/or described in connection with at least one of the figures, as set forth more completely in the claims.
According to an aspect of the invention, a method is provided for processing information in a secure communication system, the method comprising: decrypting code that is segmented into a plurality of code segments, based on decryption algorithm parameters embedded between successive ones of each of said plurality of code segments, wherein each of said plurality of code segments is protected by different decryption algorithm parameters.
Advantageously, a length of said plurality of code segments varies.
Advantageously, said decryption algorithm parameters for each segment comprises: corresponding decryption key information, corresponding initialization vector information and a corresponding code segment length information.
Advantageously, said decryption key information comprises an index into a separate key table.
Advantageously, said key table is stored using combinatorial logic.
Advantageously, the method further comprises decrypting successive blocks of information in ones of said plurality of code segments utilizing a preceding decrypted output.
Advantageously, the method further comprises decrypting successive blocks of information in ones of said plurality of code segments utilizing a corresponding initialization vector.
Advantageously, the method further comprises decrypting successive blocks of information from said plurality of code segments where use of either an initialization vector or an output block from a previously decrypted code segment may be individually selected.
Advantageously, the method further comprises decrypting decryption algorithm parameters for a subsequent one of said plurality of code segments while a current one of said plurality of code segments is being decrypted.
Advantageously, the method further comprises generating one or more of said decryption algorithm parameters using a linear feedback shift register.
Advantageously, the method further comprises acquiring a seed used by said linear feed back shift register from a one-time-programmable memory.
According to an aspect of the invention, a system is provided for processing information in a secure communication system, the system comprising:
at least one processor that decrypts code that is segmented into a plurality of code segments, based on decryption algorithm parameters embedded between successive ones of each of said plurality of code segments, wherein each of said plurality of code segments is protected by different decryption algorithm parameters.
Advantageously, a length of said plurality of code segments varies.
Advantageously, said decryption algorithm parameters for each segment comprises: corresponding decryption key information, corresponding initialization vector information and a corresponding code segment length information.
Advantageously, said decryption key information comprises an index into a key table.
Advantageously, said key table is stored using combinatorial logic.
Advantageously, at least one processor enables decryption of successive blocks of information in each of said plurality of code segments utilizing a preceding decrypted output.
Advantageously, at least one processor enables decryption of successive blocks of information in each of said plurality of code segments utilizing a corresponding initialization vector.
Advantageously, at least one processor enables decryption of successive blocks of information from said plurality of code segments where use of either an initialization vector or an output block from a previously decrypted code segment may be individually selected.
Advantageously, at least one processor enables decryption of decryption algorithm parameters for a subsequent one of said plurality of code segments while a current one of said plurality of code segments is being decrypted.
Advantageously, the system further comprises at least one linear feedback shift register that enables generation of one or more of said decryption algorithm parameters.
Advantageously, the system further comprises at least one one-time-programmable memory that enables acquiring a seed used by said linear feedback shift register.
According to an aspect of the invention, a machine-readable storage is provided having stored thereon, a computer program having at least one code section for processing information in a secure communication system, the at least one code section being executable by a machine for causing the machine to perform steps comprising:
decrypting code that is segmented into a plurality of code segments, based on decryption algorithm parameters embedded between successive ones of each of said plurality of code segments, wherein each of said plurality of code segments is protected by different decryption algorithm parameters.
Advantageously, a length of said plurality of code segments varies.
Advantageously, said decryption algorithm parameters for each segment comprises: corresponding decryption key information, corresponding initialization vector information and a corresponding code segment length information.
Advantageously, said decryption key information comprises an index into a key table.
Advantageously, said at least one code section comprises code that enables said key table to be stored using combinatorial logic.
Advantageously, said at least one code section comprises code that enables decryption of successive blocks of information in each of said plurality of code segments utilizing a preceding decrypted output.
Advantageously, said at least one code section comprises code that enables decryption of successive blocks of information in each of said plurality of code segments utilizing a corresponding initialization vector.
Advantageously, said at least one code section comprises code that enables decrypting successive blocks of information from said plurality of code segments where use of either an initialization vector or an output block from a previously decrypted code segment may be individually selected.
Advantageously, said at least one code section comprises code that enables decryption of decryption algorithm parameters for a subsequent one of said plurality of code segments while a current one of said plurality of code segments is being decrypted.
Advantageously, said at least one code section comprises code that enables generation of one or more of said decryption algorithm parameters using a linear feedback shift register.
Advantageously, said at least one code section comprises code that acquires a seed used by said linear feed back shift register from a one-time-programmable memory.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary reprogrammable security system that may utilize decryption with varying and changing keys, in accordance with an embodiment of the invention.

FIG. 2A is a block diagram illustrating an exemplary decryption system with a storage stack comprising a plurality of embedded initialization vectors for implementation of variable and changing keys in a code encryption system, in accordance with an embodiment of the invention.

FIG. 2B is a block diagram illustrating an exemplary decryption system with a storage stack comprising one embedded initialization vector for implementation of variable and changing keys in a code encryption system, in accordance with an embodiment of the invention.

FIG. 2C is a block diagram illustrating an exemplary decryption system with a storage stack comprising selectable initialization vectors for implementation of variable and changing keys in a code encryption system, in accordance with an embodiment of the invention.

FIG. 2D is a block diagram illustrating an exemplary decryption system with a storage stack for implementation of variable and changing keys in a code encryption system and with a linear feedback shift register utilized for generating key indices, in accordance with an embodiment of the invention.

FIG. 3A is a flow chart is a flow diagram illustrating exemplary steps for implementing variable and changing keys in a code encryption system wherein key table indices are stored in the embedded data structures, in accordance with an embodiment of the invention.

FIG. 3B is a flow chart is a flow diagram illustrating exemplary steps for implementing variable and changing keys in a code encryption system wherein a linear feedback shift register is utilized for generating key indices, in accordance with an embodiment of the invention.

### DETAILED DESCRIPTION OF THE INVENTION

Certain aspects of the invention may be found in a method and system for variable and changing keys in a code encryption system. Aspects of the method and system may comprise decrypting a body of code that may have been divided into a plurality of code segments of varying length and storing the body of code on a distributed device, for example a set top box. Each of the plurality of code segments may be decrypted utilizing a unique set of decryption algorithm parameters. A plurality of data structures embedded between the plurality of code segments may store decryption algorithm parameter information. In another embodiment of the invention one or more elements of the decryption algorithm parameter information may be generated on the distributed device.

In a secure, reprogrammable system, the security CPU code may be stored in a flash drive, for example. It may be necessary to encrypt the security CPU code in order to protect customer secrets, as well as chip-vendor secrets.

In accordance with an embodiment of the invention, a method for variable and changing keys in a code encryption system may include utilizing multiple keys to encrypt code in the STBs. If a single key for a STB is discovered by an unauthorized user and distributed over the Internet, for example, the unauthorized user may be able to recover only a small portion of the code. One embodiment of the invention may provide storing a set of multiple keys for STBs in a combinatorial on-chip logic format.

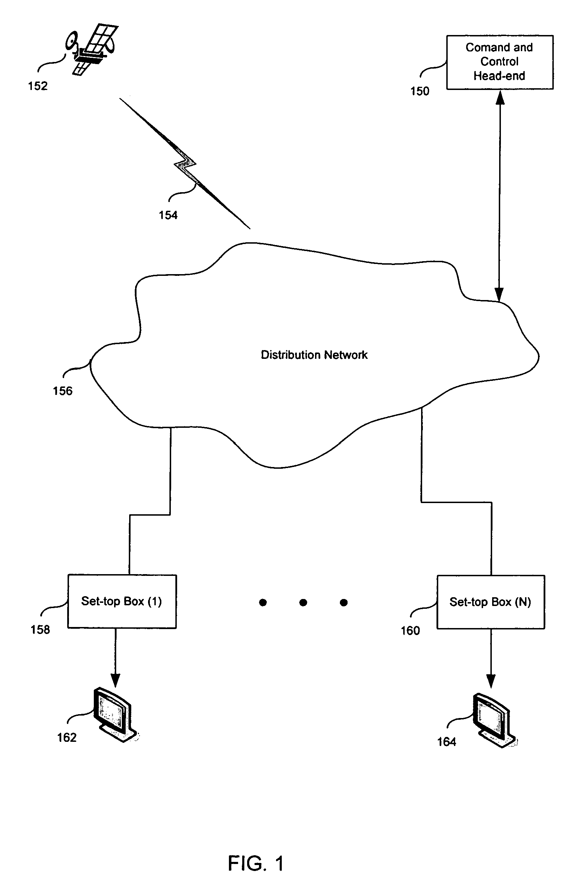

FIG. 1A is a block diagram of an exemplary communications system that may utilize variable and changing keys, in accordance with an embodiment of the invention. Referring to FIG. 1A, there is shown a video distribution system that may comprise a command and control head-end 150, a communications satellite 152, a satellite communications link 154, a communications distribution network, a plurality of set top boxes (1) 158 through (N) 160, television units 162 and 164.

The command and control head-end 150 may comprise suitable circuitry, logic and/or code and may be adapted to distribute video and control signals via the communications distribution network 156 to a plurality of set top boxes (1) 158 through (N) 160. The command and control head-end 150 may distribute code utilized for security operations within the plurality of set top boxes (1) 158 through (N) 160.

The communications distribution network 156 may comprise suitable circuitry, logic and/or code and may be adapted to provide links between various originating and terminating points for transmission of signals. The communications distribution network 156 may transport signals carrying code utilized for security operations within the plurality of set top boxes (1) 158 through (N) 160 from the command and control head-end 150.

The communications satellite 152 and corresponding satellite communications link 154 may comprise suitable circuitry, logic and/or code and may be adapted to provide uplink and downlink wireless transmissions for the distribution network 156. The communications satellite 152 uplink and downlink wireless transmissions may transport signals carrying code utilized for security operations within the plurality of set top boxes (1) 158 through (N) 160 from the command and control head-end 150.

The plurality of set top boxes (1) 158 through (N) 160 may comprise suitable circuitry, logic and/or code and may be adapted to receive and transmit signals from/to the command and control head-end 150. The plurality of set top boxes (1) 158 through (N) 160 may comprise suitable circuitry, logic and/or code for processing, storing and communicating information within the set top box. The plurality of set top boxes (1) 158 through (N) 160 may comprise a reprogrammable security system that may enable security operations for protected functionality therein. The plurality of set top boxes (1) 158 through (N) 160 may be communicatively coupled with the distribution network 156 and corresponding television units shown as 162 and 164.

A plurality of television units shown as 162 and 164 are communicatively coupled with corresponding set top boxes. The television units may receive and display decrypted signals from the set top boxes.

In operation, new versions of security processor code may be distributed by the command and control head-end 150 and transported via communications signals to the plurality of set top boxes (1) 158 through (N) 160 via one or more of the communications satellite 152, the satellite communications link 154, and the communications distribution network 156. The plurality of set top boxes (1) 158 through (N) 160 may download the code and perform security operations according to an embodiment of the invention.

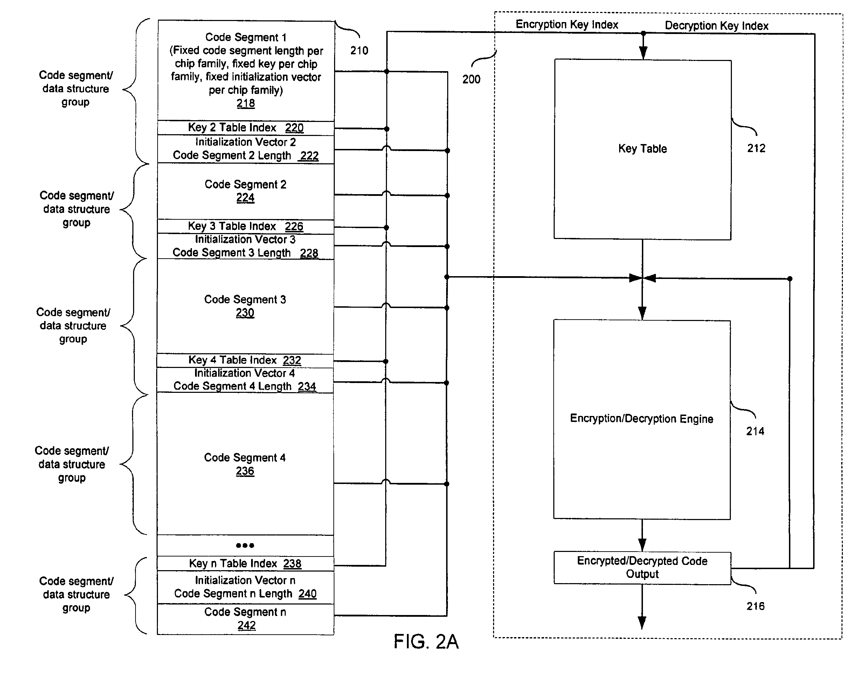

FIG. 2A is a block diagram illustrating an exemplary decryption system which utilizes variable and changing keys in accordance with an embodiment of the invention. Referring to FIG. 2A, there is shown an integrated circuit 200, memory 210, code segments 218, 224, 230, 236 and 242, data structures 220, 222, 226, 228, 232, 234, 238 and 240, a key table 212, an encryption/decryption engine 214 and a encrypted/decrypted code block output 216.

The memory 210 may for example be an external flash memory and may comprise storage for a plurality of code segments and a plurality of embedded corresponding data structures. The memory 210 may be communicatively coupled with the encryption/decryption engine 214. The first code segment 218 and the data structures 220 and 222 together as a group may be decrypted utilizing a fixed key, a fixed initialization vector and a fixed code segment length wherein the fixed parameters may be utilized in common with a plurality of distributed devices in the field.

The data structure 220 may comprise a key two table index which may be utilized to identify a key within the integrated circuit 200 key table 212. The data structure 222 may comprise initialization vector two and code segment two length. A set of decryption parameters comprising the key from key table 212 identified by key two table index, the initialization vector two and code segment two length may be communicated to the encryption/decryption engine 214. The set of decryption parameters may be utilized to decrypt code segment two stored within 224 together with a key three table index within 226 and an initialization vector three and a code segment length three within 228.

The data structure 226 may comprise a key three table index which may be utilized to identify a key within key table 212 on the integrated circuit 200. The data structure 228 may comprise initialization vector three and code segment three length. A set of decryption parameters comprising a key from key table 212 identified by key three table index, the initialization vector three and code segment three length may be communicated to the encryption/decryption engine 214. The set of decryption parameters may be used to decrypt code segment three 230 together with a key four table index from 232 and an initialization vector four and a code segment length four from 234.

Decryption parameters corresponding to code segment four within 236 through code segment n within 242, may be utilized to decrypt code segments four through code segment n and corresponding successive data structures according to the method described for code segment two 224 and code segment three 230 and corresponding successive data structures.

The key table 212 may comprise a plurality of decryption algorithm keys which are mapped to associated key indices. The key table may be stored in combinatorial logic to provide better protection against physical chip attacks. The key table may be communicatively coupled with the encryption/decryption engine 214. In an embodiment of the invention comprising a decryption engine, the key table 212 may be communicatively coupled with the decrypted code output block 216. In another embodiment of the invention comprising an encryption engine, the key table may be communicatively coupled to the memory 210.

The encryption/decryption engine 214 may function as a decryption engine and decrypt successive code segment/data structure groups from memory 210. In this regard, the decryption engine 214 may be communicatively coupled with the memory 210, the key table 212 and the encrypted code output 216. The decryption engine 214 may receive as input, an encrypted code segment and a subsequent and contiguous data structure from memory 210. The decryption engine 214 may also receive corresponding decryption algorithm parameters comprising a key from key table 212, and an initialization vector or previously decrypted code block from and code segment length from the preceding decryption output 216. The decryption engine 214 may output a blocks of decrypted code segments and decryption algorithm parameters for the next group comprising an encrypted code segment and a subsequent and contiguous data structure.

In another embodiment of the invention comprising an encryption engine, the encryption/decryption engine 214 may function as an encryption engine and encrypt successive groups of code segments and data structures. In this regard, the encryption engine 214 may be communicatively coupled with the memory 210, the key table 212 and the decrypted code output 216. The encryption engine 214 may receive as input, groups comprising a code segment and a subsequent contiguous data structure from memory 210. The encryption engine 214 may also receive corresponding encryption algorithm parameters comprising a key from a key table 212 and an initialization vector and code segment length from memory 210 or instead of the initialization vector, a previously encrypted code output block from 216. The encryption engine 214 may output blocks of encrypted code segments and data structures.

The encrypted/decrypted code output block 216 comprises output from the encrypted/decrypted engine. The encrypted/decrypted code output block is communicatively coupled with the input of the encryption/decryption engine 214 and the input of the key table 212. When a decrypted block of data comprising the decryption algorithm parameters is output from encryption/decryption engine 214 the decrypted key index for decrypting the next code segment is sent to the input of the key table 212 and the decrypted block of data is sent to the input of the encryption/decryption engine wherein the decrypted block of data may be used as a decryption algorithm parameter in place of the initialization vector.

In operation, an encrypted body of code that may have been partitioned into a plurality of code segments of varying length and stored in a memory 210 on a distributed device, for example a set top box. A plurality of data structures 220, 222, 226, 228, 232, 234, 238, and 240 embedded between the plurality of code segments 218, 224, 230, 236, and 242 may store decryption algorithm parameter information. Except for the first of the plurality code segments, ones of the plurality of code segments may have corresponding ones of the plurality of data structures. The ones of the plurality of data structures may be embedded preceding their corresponding ones of the plurality of code segments.

The encrypted body of code may be stored in a memory 210 which may for example be a flash memory, on one or more distributed devices such as a set top box. Different segments of code within the plurality of code segments may be decrypted utilizing different sets of decryption parameter information. The body of code may be decrypted by first grouping a code segment with a subsequent and contiguous data structure and then decrypting the group with one set of the decryption algorithm parameters. A first segment of code to be decrypted may be grouped with the subsequent and contiguous data structure which may comprise decryption algorithm parameter information corresponding to a second code segment. A first code segment/data structure group may be decrypted utilizing a fixed or known set of decryption algorithm parameter information which may be utilized by a plurality of similar deployed devices. In this manner, after the first code segment/data structure group is decrypted a set of decryption algorithm parameter information for the second code segment/data structure group is made available for utilization. Successive code segment/data structure groups are decrypted in the same manner.

A set of decryption algorithm parameter information stored in a data structure for example 220 and 222 may for example, comprise a key table index, an initialization vector and a code segment length corresponding to a subsequent and contiguous code segment 224. The initialization vector may be used to initialize a decryption algorithm parameter that may change with iterations of the decryption process. The key table index may be used to identify a key in a key table 212. The key table 212 may be stored in combinatorial logic on the device. Decryption for a code segment/data structure group may be chained wherein the first block of code from the code segment/data structure group is decrypted utilizing an initialization vector and a decryption key. After the first block of code is decrypted, the decrypted output block may be fed back to the input of the decryption engine 214 and used in place of the initialization vector and utilized with the key for decrypting the next block of data. In this manner, successive blocks of data utilize the preceding decrypted block output and the corresponding key as decryption algorithm parameters. When a subsequent code segment/data structure group is decrypted, a new set of decryption parameters is used including a new initialization vector for the first block of data in the code segment/data structure group. Successive code segment/data structure groups may be decrypted in a similar manner.

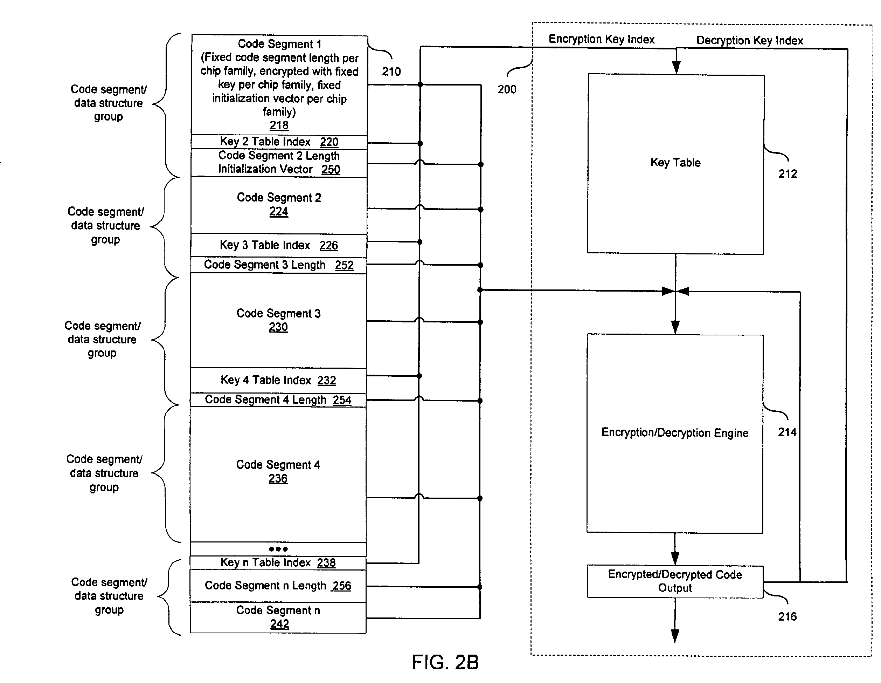

FIG. 2B is a block diagram illustrating another embodiment of the invention wherein the initialization vector and the process of chaining or feeding back of decryption engine output is different from that illustrated in FIG. 2A. Referring to FIG. 2B, there are shown many of the same elements seen in FIG 2A including memory 210, code segments 218, 224, 230, 236 and 242, data structures 220, 226, 232, and 238, a key table 212, an encryption/decryption engine 214 and a encrypted/decrypted code block output 216. New or altered elements in FIG. 2B comprise data structures 250, 252, 254 and 256.

Data structure 250 may be stored in memory 210 and may comprise an initialization vector that may be decrypted with code segment one 218 and key 2 table index 220. The data structures 252, 254 and 256 comprise a code segment length corresponding to a subsequent and contiguous code segment as in FIG. 2A but do not contain any initialization vectors.

In operation, an encrypted body of code comprising the new or altered data structures is decrypted in a similar manner to one comprising the data structures shown in FIG. 2A except for the chaining or feeding back of decrypted code output to the input of the decryption engine 214. Shown in FIG. 2B, a set of decryption algorithm parameter information stored in data structure 220 and 250 may for example, comprise a key table index, an initialization vector and a code segment length corresponding to a subsequent and contiguous code segment 224. The initialization vector may be used to initialize a decryption algorithm parameter that may change with iterations of the decryption process. The key table index may be used to identify a key in a key table 212. The key table 212 may be stored in combinatorial logic on the device.

Decryption of a code segment/data structure group may be chained wherein the first block of code from the code segment/data structure group is decrypted utilizing the initialization vector and a decryption key. After the first block of code is decrypted, a decrypted output block may be fed back to the input of the decryption engine 214 and used in place of the initialization vector with the key from the key table for decrypting the next block of data. In this manner, successive blocks of data utilize the preceding decrypted block output and a corresponding key as decryption algorithm parameters. However in FIG. 2B, when a subsequent code segment/data structure group is decrypted, a new set of decryption parameters is used but no new initialization vector is used. Instead, an output from the last decrypted block of the preceding code segment /data structure group us utilized. Successive code segment/data structure groups may be decrypted in the same manner.

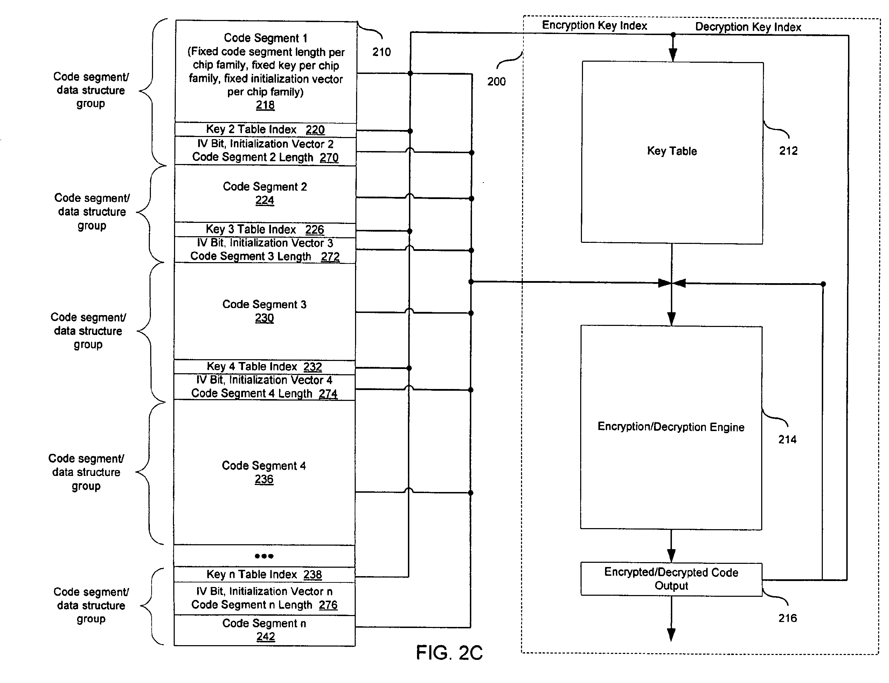

FIG. 2C is a block diagram illustrating another embodiment of the invention wherein use of an initialization vector may be selectable on a per code segment basis. Accordingly, encryption and or decryption of a code segment may begin with a new initialization vector or may utilize an output block from encryption and or decryption of a prior code segment thus, chaining through one or more code segments. Implementation of selectable initialization vectors may be accomplished in several ways. For example, a bit may be added to a data structure and utilized as an indicator of a valid initialization vector for encryption and or decryption of a subsequent code segment. In another example, a specified value in the initialization vector field of a data structure may indicate that output from a prior code segment should be utilized rather than a new initialization vector. Referring to FIG. 2C, there are shown many of the same elements seen in FIG. 2A including memory 210, code segments 218, 224, 230, 236 and 242, data structures 220, 226, 232, and 238, a key table 212, an encryption/decryption engine 214 and a encrypted/decrypted code block output 216. New or altered elements in FIG. 2C comprise data structures 270, 272, 274 and 276.

Data structure 270 may be stored in memory 210 and may comprise an initialization vector (IV) bit, an initialization vector and a code segment two length to be utilized as parameters in the decryption engine 214. The IV bit may indicate whether decryption of code segment two should begin with initialization vector two or with an output from decryption of code segment one as a parameter. The data structures 272, 274 and 276 comprise decryption parameters: an IV bit, an initialization vector if indicated by the IV bit and a code segment length wherein each parameter within a data structure corresponds to a subsequent and contiguous code segment as shown in FIG. 2C.

In operation, an encrypted body of code comprising data structures enabling selectable initialization vectors as shown FIG. 2C, may be decrypted in manner similar to that for code comprising the data structures shown in FIG. 2A and 2B. Accordingly, when a subsequent segment of code is decrypted, an IV bit may indicate whether a new initialization vector may be utilized as a parameter or whether decryption engine 214 output from a prior segment of code may be fed back and utilized as an input parameter. Shown in FIG. 2C, a set of decryption algorithm parameter information stored in data structure 220 and 270 may for example, comprise a key table index, an IV bit, an initialization vector and a code segment length corresponding to a subsequent and contiguous code segment 224. The IV bit may be utilized to select use of initialization vector or chained output from decryption engine 214. The initialization vector may be used to initialize a decryption algorithm parameter that may change with each iteration of the decryption process. The key table index may be used to identify a key in a key table 212. The key table 212 may be stored in combinatorial logic on the device.

If the IV bit indicates a valid initialization vector that should be utilized in the decryption process, decryption of a code segment/data structure group may be chained wherein the first block of code from the code segment/data structure group is decrypted utilizing the initialization vector and a decryption key. After the first block of code is decrypted, a decrypted output block may be fed back to the input of the decryption engine 214 and used in place of the initialization vector with the key from the key table for decrypting the next block of data. In this manner, successive blocks of data utilize the preceding decrypted block output and a corresponding key as decryption algorithm parameters. However in FIG. 2C, when the IV bit indicates that a subsequent code segment/data structure group should be chained with a prior code segment/data structure group, a new set of decryption parameters is utilized except for an initialization vector. Instead, an output from the last decrypted block of the preceding code segment/data structure group us utilized as input to the decryption algorithm. Successive code segment/data structure groups may be decrypted in the same manner.

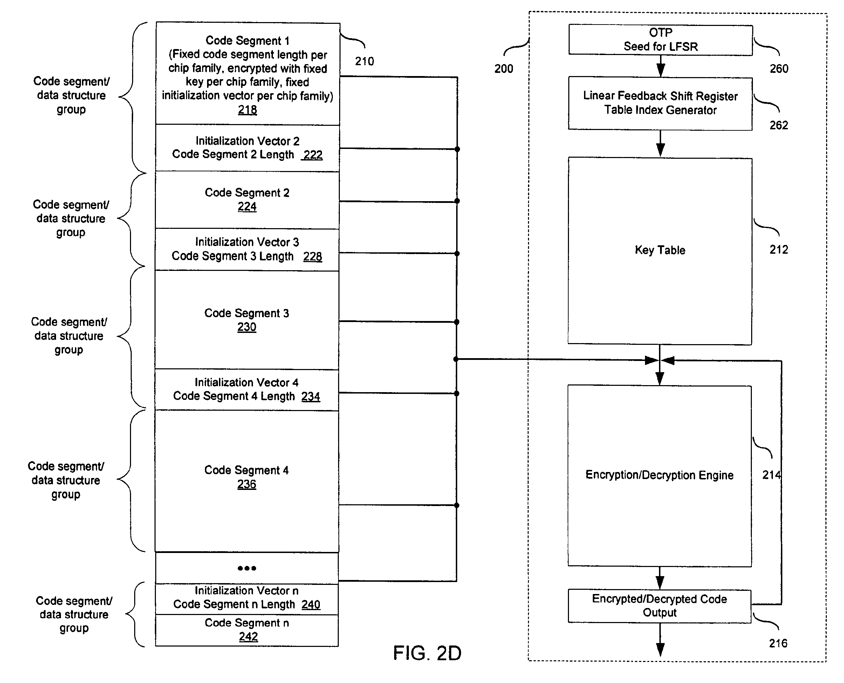

FIG. 2D illustrates another embodiment of the invention wherein the key table indices may be generated or stored on a plurality of devices in the field rather than embedded between the code segments and communicated over a communications network. Referring to FIG. 2D, a linear feedback shift register (LFSR) 262 for example, may generate key table indices for the key table 212. A seed for initializing the LFSR may be stored in a one time programmable (OTP) memory 260. In this regard, the data structures 220, 226, 232 and 238 in memory 210 storing key table indices and shown in FIG. 2A, may be eliminated. Other blocks shown in FIG. 2D may be the same and function in a similar manner as the blocks shown in FIG. 2A.

A plurality of devices in the field for example a family of integrated circuits, may decrypt the same body of code in memory 210 and generate the same sequence of corresponding key table indices if they utilize the same LFSR scheme and are initialized with the same seed value. The seed for the LFSR may be stored on the plurality of devices in a one time programmable memory 260 and entered into the LFSR before generation of the first key index from the LFSR.

In operation, an encrypted body of code stored in memory 210 comprising code segments and data structures as shown in FIG 2D may decrypted with a method similar to the one described for FIG. 2A except for the steps of the method that produce a key for input into the decryption algorithm. In this regard the key table 212 may be the same as the one shown in FIG. 2A comprising a table of keys and associated key table indices and may be stored in combinatorial logic. A key for input to the decryption engine may be generated by the LFSR 262. For example, the LFSR may receive a seed from the OTP 260 in preparation for the first LFSR operation. For decryption of successive code segments stored in memory 210, the LFSR 262 may output a corresponding key index. The key index may be sent to key table 212 and utilized to identify a corresponding key. The key from key table 212 may be sent to the decryption engine 214 with a corresponding initialization vector and a corresponding code segment length from memory 210.

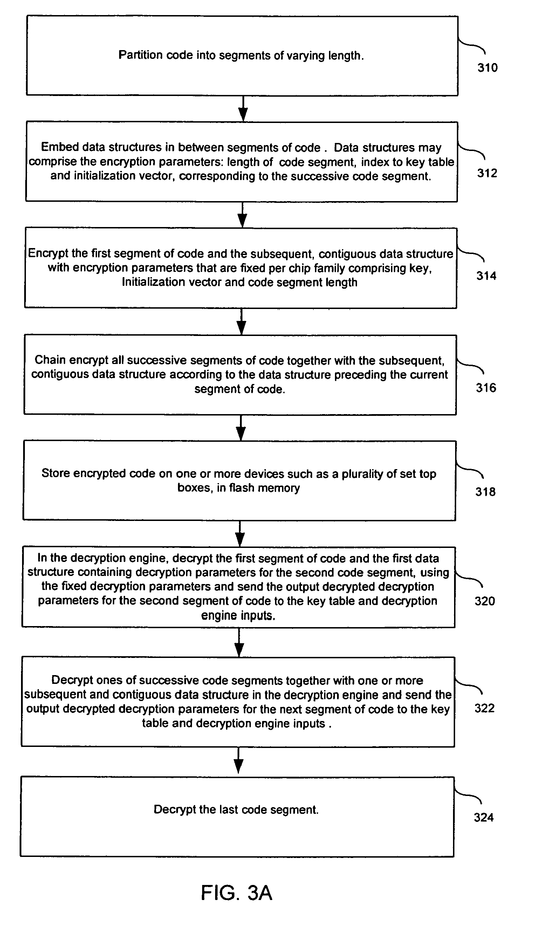

FIG. 3A is a flow chart illustrating exemplary steps utilizing for decryption operations, varying decryption algorithm parameters that may be embedded between code segments and communicated to a device as shown in FIG 2A, in accordance with an embodiment of the invention. Referring to FIG. 3A, in step 310 a body of code is divided into segments of varying length. In step 312, data structures comprising encryption parameters: length of code segment, index to key table and initialization vector are embedded with corresponding code segments. In step 314, the first segment of code and one or more subsequent contiguous data structures may be encrypted with encryption parameters that are fixed per chip family. In step 316 successive code segments may be encrypted together with ones of subsequent and contiguous data structures based on corresponding encryption algorithm parameters. In step 318, encrypted code may be received by one or more of a plurality of distributed devices and stored in memory 210 wherein code segments are stored as shown in 218, 224, 230, 236 and 242 and data structures comprising encryption parameters: length of code segment, index to key table and initialization vector are stored as shown in 220, 222, 226, 228, 232, 234, 238 and 240. In step 320, the first segment of code 218 and the subsequent, contiguous data structures 220 and 222 are chain decrypted in decryption engine 214 with fixed decryption parameters per chip family. The decrypted output from 214 including a code segment and a second set of decryption parameters, may then be sent to the input of the key table 212 and the input of the decryption engine 214. In step 322, successive code segments may be decrypted with subsequent and contiguous data structures. Decrypted output from 214 may contain code segments and decryption parameters for the next segment of code. Decrypted output from 214 may be sent to the input of the key table 212 and input of the decryption engine 214. In step 324 the last code segment n stored in 242 may be decrypted.

In accordance with an exemplary embodiment of the invention, a body of code for a device such as a set top box may be segmented and embedded with decryption algorithm parameter information. The segmented code and embedded decryption parameter information may be distributed and stored for example on a plurality of set top box devices in memory 210 as shown in FIG. 2A. The first segment of code 218 and the first set of embedded decryption parameter information 220 and 222 may be sent for decryption in decryption engine 214 and decrypted based on a fixed set of decryption algorithm parameters. The fixed set of decryption algorithm parameters may be common to a plurality of devices utilizing a common chip family. Ones of successive segments of code 224, 230, 236 and 242 along with ones of subsequent and contiguous sets of decryption algorithm parameters 220, 222, 226, 228, 232, 234, 238 and 240 are decrypted in decryption engine 214. Successive decryption operations may be based on a set of decryption algorithm parameters released from the decryption operation preceding decryption of a current code segment.

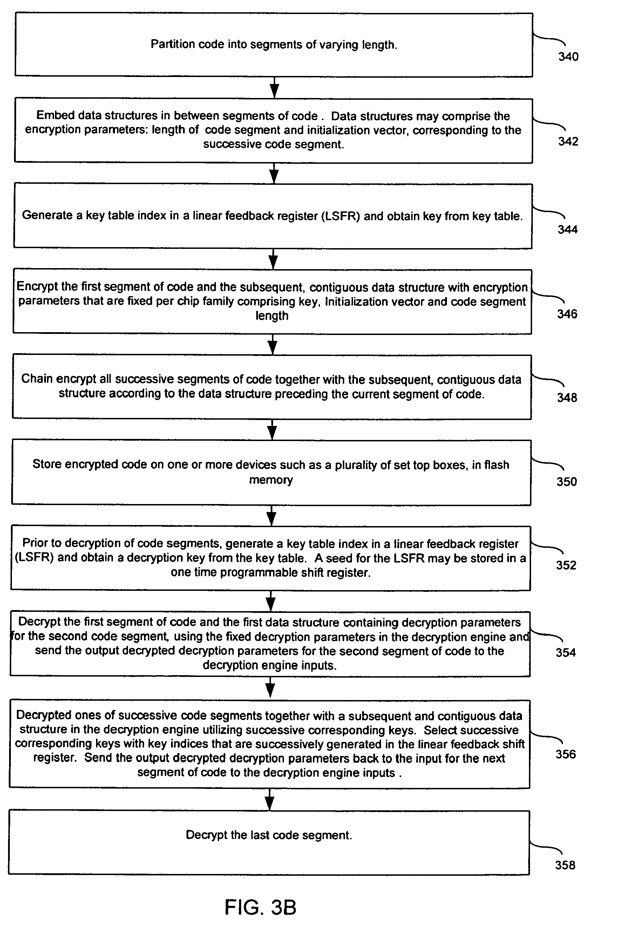

FIG. 3B is a flow chart illustrating exemplary steps for decryption operations utilizing varying decryption algorithm parameters wherein one or more of the varying decryption algorithm parameters may be stored between code segments and communicated to a device and one or more of the varying decryption algorithm parameters may be generated on the device as shown in FIG 2D, in accordance with an embodiment of the invention. Referring to FIG. 3B, in step 340, a body of code is divided into segments of varying length. In step 342, data structures comprising encryption parameters: length of code segment and initialization vector, are embedded subsequent to and contiguous with corresponding code segments.

In step 344, encryption keys are selected. In step 346, the first segment of code and one or more subsequent contiguous data structures are chain encrypted with encryption parameters that are fixed per chip family. In step 348, successive code segments may be encrypted together with subsequent and contiguous data structures based on corresponding encryption algorithm parameters.

In step 350, encrypted code and one or more encryption algorithm parameters is received by one or more of a plurality of distributed devices and stored in memory 210 which may be for example a flash memory as shown in 218, 224, 230, 236 and 242. Data structures comprising encryption algorithm parameters: length of code segment and initialization vector, are stored as shown in 222, 228, 234 and 240. In step 352, a seed from a one time programmable memory 260 may be utilized in a linear feed back shift register (LFSR) 262 to generate a key table index.

In step 354, a first segment of code in memory 218 and a data structure 222 comprising one or more decryption algorithm parameters corresponding to a second segment of code may be decrypted in decryption engine 214 based on a fixed set decryption parameters. The decrypted decryption algorithm parameters for the second segment of code may be output from the decryption engine 214 and sent back to the input 214 for the next decryption operation. In step 356, successive code segments may be decrypted with ones of subsequent and contiguous data structures in the decryption engine 214 utilizing successive: corresponding keys, decrypted initialization vectors and decrypted code segment lengths. The successive corresponding keys may be selected from the key table 212 by key indices that may be successively generated in a linear feedback shift register 262. Decrypted output from 214 may be sent back to the input of the decryption engine 214. In step 358 the last code segment n stored in 242 may be decrypted.

In accordance with an exemplary embodiment of the invention, a body of code for a device such as a set top box may be segmented and embedded with decryption algorithm parameter information. The segmented code and embedded decryption parameter information may be distributed and stored for example on a plurality of set top box devices in memory 210 as shown in FIG. 2A. The first segment of code 218 and the first set of embedded decryption parameter information 222 may be sent to the decryption engine 214 and may be decrypted based on a fixed set of decryption algorithm parameters. The fixed set of decryption algorithm parameters may be common to a plurality of devices utilizing a common chip family. Successive segments of code 224, 230, 236 and 242 along with subsequent and contiguous sets of decryption algorithm parameters 220, 222, 226, 228, 232, 234, 238 and 240 are decrypted in decryption engine 214. In this regard, decryption algorithm parameters released from a preceding decryption operation and keys from key table 212 which are selected by a key index generated in LFSR 262 may be utilized.

Certain embodiments of the invention may comprise a machine-readable storage having stored thereon, a computer program having at least one code section for communicating information within a network, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for processing information in a secure communication system, the method comprising: decrypting code that is segmented into a plurality of code segments, based on decryption algorithm parameters embedded between successive ones of each of said plurality of code segments, wherein each of said plurality of code segments is protected by different decryption algorithm parameters.

2. The method according to claim 1, wherein a length of said plurality of code segments varies.

3. The method according to claim 1, wherein said decryption algorithm parameters for each segment comprises: corresponding decryption key information, corresponding initialization vector information and a corresponding code segment length information.

4. The method according to claim 3, wherein said decryption key information comprises an index into a separate key table.

5. The method according to claim 4, wherein said key table is stored using combinatorial logic.

6. A system for processing information in a secure communication system, the system comprising:
at least one processor that decrypts code that is segmented into a plurality of code segments, based on decryption algorithm parameters embedded between successive ones of each of said plurality of code segments, wherein each of said plurality of code segments is protected by different decryption algorithm parameters.

7. The system according to claim 6, wherein a length of said plurality of code segments varies.

8. The system according to claim 6, wherein said decryption algorithm parameters for each segment comprises: corresponding decryption key information, corresponding initialization vector information and a corresponding code segment length information.

9. The system according to claim 8, wherein said decryption key information comprises an index into a key table.

10. A machine-readable storage having stored thereon, a computer program having at least one code section for processing information in a secure communication system, the at least one code section being executable by a machine for causing the machine to perform steps comprising:
decrypting code that is segmented into a plurality of code segments, based on decryption algorithm parameters embedded between successive ones of each of said plurality of code segments, wherein each of said plurality of code segments is protected by different decryption algorithm parameters.
